Europäisches Patentamt

European Patent Office

Office européen des brevets

(11) Publication number: **0 399 698**
**A2**

## (12) EUROPEAN PATENT APPLICATION

(21) Application number: **90305053.2**

(22) Date of filing: **10.05.90**

(51) Int. Cl.⁵: **C08L 61/10, C08L 29/10,**
**//(C08L61/10,29:00)**

(30) Priority: **25.05.89 GB 8912062**

(43) Date of publication of application:
**28.11.90 Bulletin 90/48**

(84) Designated Contracting States:
**BE DE ES FR GB IT NL SE**

(71) Applicant: **The British Petroleum Company p.l.c.**
**Britannic House Moor Lane**
**London EC2Y 9BU(GB)**

(72) Inventor: **Benham, Harold Livingstone,**
**The British Petroleum Comp. p.l.c., Chertsey Road**
**Sunbury-on-Thames, Middlesex, TW16 7LN(GB)**
Inventor: **Mitchell, James Alexander**
**The British Petroleum Comp. p.l.c., Chertsey Road**
**Sunbury-on-Thames, Middlesex, TW16 7LN(GB)**

(74) Representative: **Ryan, Edward Terrence et al**
**BP INTERNATIONAL LIMITED, Patents Division Chertsey Road**
**Sunbury-on-Thames Middlesex, TW16 7LN(GB)**

(54) Phenolic resins.

(57) A blend of a major amount of a curable novolac and a minor amount of poly(vinyl methyl ether) gives a compatible homogeneous product with increased flexibility.

EP 0 399 698 A2

## PHENOLIC RESINS

The present invention relates to phenolic resins, and in particular to novolac resins.

It is often desirable to make blends of polymeric materials in order to obtain desirable properties in the blend. It may be desirable to make blends which are homogeneous i.e. in which one polymeric material is dissolved in the second material such that it cannot be detected visually, and which show physical properties, such as glass transition temperature, which are characteristic of a single phase or miscible blend rather than the individual polymer components.

Phenolic resins are brittle and have poor adhesion. There is therefore no interest in incorporating polymers into phenolic resins in order to improve their properties, for example flexibility.

S.R. Fahrenholtz and T.K. Kwei, Macromolecules 1981,14,1076-1079 describe experiments in which blends of phenolic resins with various polymers were prepared. Among the polymers which were used were poly(vinyl methyl ether) (PVME), poly(styrene) (PS), poly(methyl methacrylate) (PMMA), and a copolymer of styrene and acrylonitrile (PSAN). The phenolic resins were described as novolacs.

Novolac resins are phenolic resins which cannot be cured to a thermoset cross-linked product merely by heating. The commercially available novolac resins are prepared from a phenolic feedstock consisting wholely or mainly of phenol itself. Although they are not curable directly by heating they can be cured to thermoset products if cross-linking agents are mixed with them. Mixtures of novolac resins and cross-linking agents find extensive use in moulding powders.

It is possible to produce phenolic resins which may be described as novolacs because they do not cure to thermoset products on heating, but which do not have reactive sites which enable them to be cured by addition of cross-linking agents. The phenolic resins used by Fahrenholtz and Kwei are of this type as they were prepared from substituted phenols and/or cresols. Using these novolac resins, of a type which were not suitable for moulding thermoset articles, they found that all polymers they tested were compatible, except polystyrene.

We have found that the behaviour of curable novolac resins when blended with resins is different from that of non-curable resins. In particular polymers which are compatible with non-curable resins are not necessarily compatible with curable novolacs.

According to the present invention a polymer blend comprises a major proportion of a curable novolac resin and a minor proportion of poly(vinyl methyl ether).

As explained above novolac resins are not curable directly by heating. By "curable" novolac resin we mean a phenolic resin which is curable when a cross-linking agent is added to it. Such phenolic resins are commercially available and methods of making them will be well-known to those skilled in the manufacture of phenolic resins. Thus the phenolic feedstock used in the preparation of the resin preferably consists substantially only of phenol. The novolac is preferably a phenol-formaldehyde resin. The preparation of phenol-formaldehyde resins is described in "Phenolic Resins -Chemistry, Applications and Performance, Future Directions", A. Knop, L.A. Pilato, Springer Verlag 1985 p.95 and in "Preparative methods of Polymer Chemistry" 2nd edition, Interscience 1968.

In the preparation of phenol-formaldehyde novolacs typical reactant ratios which may be used are 0.75 - 0.9 moles of formaldehyde per mole of phenol.

The number average molecular weight of the novolac may for example be in the range 500 to 1500.

The poly(vinyl methyl ether) is also a commercially available polymer. The number average molecular weight is perferably at least 4000, more preferably in the range 7000 to 35000, and the weight average molecular weight is preferably in the range 35000 to 100000.

The novolac resin is the major component of the blend and preferably consitutes at least 60% by weight of the blend, more preferably at least 80% by weight.

The blend may be prepared by mixing particles of solid phenolic resin and PVME and then melting the mixture with stirring. Alternatively the components of the blend may be brought to the molten state separately and then mixed together. It may be advantageous to allow the molten mixture to cool and then to comminute it and remelt it to obtain a more homogeneous mixture.

The blend of the present invention may be prepared in the presence of a cross-linking agent to give a product which is wholly or partially cross-linkable, by mixing together finely divided resin, PVME, and cross-linking agent and heating. However, as prolonged mixing of the resin and PVME in the molten state may be required to obtain a homogenous mixture it is preferred to carry out the preparation of the blend in the absence of cross-linking agent in order to avoid premature curing.

The most commonly used cross-linking agent for novolac resins, namely hexamethylene tetramine, may be used where a cross-linked material is required. The blend of the present invention may be partially cured, i.e. sufficient links between the novolac resin units may be established to significantly increase its molecular weight without making it fully thermoset. Alternatively, the blend may be fully cured to an infusible thermoset resin. The degree of cure may be controlled by the quantity of cross-linking agent used and the temperature of the curing step and the temperature used in the curing step. It is also affected by the particle size of the cross-linking agent with finer particles giving a greater degree of cure.

The invention will now be illustrated by reference to the following experiments in which examples of the invention are identified by numbers and comparative tests, not according to the invention, are identified by letters.

Example 1

This illustrates a small scale preparation of a blend of novolac resin and poly(vinyl methyl ether) (PVME).

The novolac resin used in the preparation of the blend was a commercially available resin supplied by BP Chemicals Limited. It was made by condensing a phenolic feedstock consisting substantially only of phenol with formaldehyde and was a curable material in that it could be used to produce thermoset articles by admixture of hexamethylene tetramine and heating.

The PVME was supplied by BASF under the designation "Lutanol M40". The supplier quoted a K value of 45-46. The K value is Finkentscher viscosity; H. Finkentscher, Cellulosechemie 13 60 (1932). Our own GPC measurements indicated that the material had a number average weight of about 8500 and a weight average molecular weight of about 42500.

The resin flake (80 g) and the PVME (20 g) (in the form of an extremely viscous liquid) were mixed together in a 250 ml beaker suspended in an oil bath. The mixture was then brought to 140-150°C and manually stirred to effect dissolution. The molten mixture was then removed from the beaker and allowed to cool to form a brittle solid. The solid was then ground to a coarse powder. The powder was then subjected to the steps of melting and grinding described above for two more times. It was then ground to a fine powder.

The resulting temperature was a homogenous, amber, transparent solid.

Example 2

This shows the preparation of blend on a 1 Kg scale.

A planetary mixer ("Hobart" CE 100) ("Hobart" is a trade nmae) was arranged with its mixing bowl in a 5 litre capacity electric heating mantle. A novolac phenol-formaldehyde resin (800 g), of the same type as used in Example 1, was placed in the mixing bowl. The resin was heated to approximately 150°C, at which temperature the mixture had become molten. The resin was then stirred and molten PVME (200 g), which had been preheated in an oven to about 150°C, was then added over a period of a few minutes. After the addition was complete the mixture was stirred for 15 minutes at 150°C, and then allowed to cool to ambient temperature to give a solid. The solid was broken into small lumps with a hammer and the heating and stirring process repeated. A homogeneous transparent solid was obtained.

Example 3

This example shows the preparation of a miscible blend of novolac resin and PVME on a small scale for comparison of PVME with other polymers.

A mixture of novolac resin, of the type used in the preceding examples, was prepared by adding small quantities of particulate resin and polymer in a fixed weight ratio (typically 4:1, 8 g:2 g) to a Petri-dish. The dish was then heated on a hot plate maintained at 150°C until melting of the components took place. The mixture was then stirred for sufficient time to dissolve the PVME in the resin (about 5 minutes) and then allowed to cool to room temperature. The blend was found to be a single transparent phase. This indicates that the resin and the PVME were compatible. The refractive index of the blend was determined. The results are given in Table 1.

Comparative Tests A - C

3

Experiments were carried out as in Example 3, except that the PVME was replaced by polystyrene (PS) (Test A), poly(methyl methacrylate) (PMMA) (Test B), and a styrene/acrylonitrile copolymer (Test C) respectively. The polystyrene and a molecular weight of 20000 and the styrene/acrylonitrile coopolymer was a 75% styrene/25% acrylonitrile copolymer of unknown molecular weight. Both polymers were supplied by the firm of Polysciences Limited. The poly(methyl methacrylate) was supplied by B.D.H. Ltd who described it as "low molecular weight" material.

None of these polymers gave homogeneous miscible blends with the phenolic resin. The results are shown in Table 1.

TABLE 1

| Experiment | Polymer | Physical Appearance | Miscible | Refractive Index |
|---|---|---|---|---|
| 3 | PVME | single phase, transparent | Yes | 1.47 |
| A | PS | two phase, cloudy | No | 1.6 |
| B | PMMA | two phase, separate layer | No | 1.49 |
| C | PSAN | two phase, cloudy | No | 1.57 |

The refractive index of the novolac was 1.7.

The refractive index was measured to guard against the possibility that incompatible mixtures were wrongly identified as compatible because the refractive index of the polymer was so close to that of the novolac that separate polymer phases were not visible. However, as the Table shows, the refractive indices differ considerably.

Although poly(methyl methacrylate) formed compatible mixtures with non-curable novolacs in the experiments of Fahrenholtz and Kwei it did not form a compatible, homogeneous, mixture with the curable novolac used in the present invention. Disclosures relating to these special non-curable novolac resins are thus not relevant to commercially available curable novolacs. In so far as the polymers used in Tests A to C were low molecular weight polymers (as compared with the 36000 MW PVME polymer used in the examples of the invention) then the compatibility of these polymers should have been favoured.

Example 4

This example shows the production of a partially cross-linked blend.

A sample of a blend of novolac resin and PVME prepared as in Example 2 was ground and sieved to a particle size of less than 250 micrometres. Hexamethylene tetramine (10% by weight of the mixture of resin and PVME) was then intimately mixed with the blend in a glass jar. The mixture was then poured out on to an aluminium tray, which was subsequently placed in a ventilated oven maintained at 150°C for 4 hours. The resulting product was partially cured in that it was still thermoplastic as opposed to thermoset as shown by the fact that it sintered on being ground and reheated to 150°C. The particles stuck together but retained their individual character to a high degree. It was allowed to cool to ambient temperature, and reground.

An investigation with a differential scanning calorimeter showed that the product had a single glass transition temperature (Tg = 88°C) showing that it was still homogeneous. The $T_g$ of the initial blend was 56°C. This small increase showed that the cured blend was only lightly cross-linked.

Comparative Test D

A phenol-formaldehyde novolac resin was ground to a particle size of less than 250 micrometres and 5% by weight of tetramethylene hexamine was mixed thoroughly into the resin. The mixture was placed in a mould and heated at 150°C for 1 hour, under an applied force of 15 tonnes. On cooling a resin plaque was obtained. The plaque was cut into test strips approximately 3.5 x 11 x 50 mm in size, and the flexural properties of the strips measured using an Instron device. Measurements were carried our in quadruplicate.

4

Example 5

An experiment was carried out as in Comparative Test D except that the novolac resin was replaced by a mixture of 60% novolac and 40% PVME by weight.

The results are shown in Table 2.

TABLE 2

| Experiment | % by weight of | | Average | | |
|---|---|---|---|---|---|
| | Novolac | PVME | Stress (MPa) | Strain (%) | Modulus (GPa) |
| D | 100 | 0 | 8.3 (1.7) | 0.37 (0.1) | 1.9 (0.1) |
| 5 | 60 | 40 | 10.0 (1.1) | 1.6 (0.2) | 0.6 (0.03) |

The values in paretheses after the test values are the standard deviations.

The stress to failure was the same within experimental error which indicates that the resins are equally strong. However, the resin modified with PVME was clearly more flexible as its modulus was 3-4 times lower than that of the unmodified material. Similarly, its strain at failure was about four times as big as that of the unmodified resin indicating that it was more elastic.

**Claims**

1. A polymer blend which comprises a major proportion of a curable novolac resin and a minor proportion of poly(vinyl methyl ether).

2. A polymer blend according to claim 1 wherein the novolac resin is derived from the condensation of a phenolic starting material consisting substantialy only of phenol.

3. A polymer blend according to either one of claims 1 or 2 wherein the novolac is a phenol-formaldehyde resin.

4. A polymer blend according to any one of the preceding claims wherein the novolac is the product of the condensation of formladehyde and phenol in a molar ratio of 0.75 to 0.9 moles of formaldehyde per mole of phenol.

5. A polymer blend according to any one of the preceding claims wherein the poly(vinyl methyl ether) has a number average molecular weight of at least 4000.

6. A polymer blend according to claim 5 wherein the number average molecular weight is in the range 7000 to 35000.

7. A polymer blend according to any one of the preceding claims wherein the poly(vinyl methyl ether) has a weight average molecular weight in the range 35000 to 100000.

8. A polymer blend according to any one of the preceding claims in which the novolac constitutes at least 60% of the blend of novolac and poly(vinyl methyl ether).

9. A polymer blend according to claim 8 wherein the novolac constitutes at least 80% of the blend.

10. A polymer blend according to any one of the preceding claims wherein the novolac resin is cross-linked.